# EUROPEAN PATENT APPLICATION

(11) **EP 4 156 681 A1**
(43) Date of publication of application: **29.03.2023**
(21) Application number: 21832147.9
(22) Date of filing: 07.06.2021
(51) Int. Cl.: H04N 13/239

(54) **CAMERA SYSTEM, MOBILE TERMINAL, AND THREE-DIMENSIONAL IMAGE ACQUISITION METHOD**

(30) Priority: 30.06.2020 CN 202010622551
(71) Applicant: ZTE Corporation, Shenzhen, Guangdong 518057 (CN)
(72) Inventor: ZHANG, Yongliang, Shenzhen, Guangdong 518057 (CN)
(74) Representative: WBH Wachenhausen Patentanwälte PartG mbB
(86) International application number: PCT/CN2021/098750
(87) International publication number: WO 2022/001590

(57) **Abstract**

Embodiments of the present application disclose a camera system, comprising a first photographing device, a second photographing device, a photographing assistance device, and a processing device. The photographing assistance device is used for emitting first feature light. The first photographing device is used for acquiring second feature light reflected by a target to be photographed. The second photographing device comprises a main camera and at least one secondary camera. The main camera is used for acquiring a first image of the target to be photographed, and the secondary camera is used for acquiring a second image of the target to be photographed. The processor is used for acquiring depth information of the target to be photographed, and is further used for performing feature fusion on the first image and the second image to obtain a three-dimensional image.

## Description

### TECHNICAL FIELD

The present disclosure is directed to the technical field of photographing, in particular to a camera system, a mobile terminal and a method for acquiring a three-dimensional (3D) image.

### BACKGROUND

In the field of mobile terminals, there exist monocular (single infrared receiver camera) grating type structured light applied to dot projector and pulsed type structured light applied to Time of Light (TOF) sensor. Cameras can be classified into front-facing cameras or rear-facing cameras according to whether the orientations of the cameras are consistent with the display direction, that is, the direction commonly used by the users. At present, the front-facing cameras are mainly structured light cameras, and the rear-facing cameras are mainly TOF cameras in propulsion applications. Due to the following limitations, it is rare to deploy structured light or TOF cameras in multiple directions (at least front and rear). Structured light is suitable for short-range high-precision 3D photographing. However, the intensity of diffracted light attenuates quickly and is strongly interfered by ambient light at a long distance. TOF can ensure the 3D recognition accuracy at a certain distance due to the long-distance intensity of pulsed light. However, it is challenging to achieve the same near-distance accuracy of TOF as that of the structured light.

Therefore, it is necessary to provide a new camera system, a mobile terminal, and a method for acquiring a 3D image.

### SUMMARY

Provided are a camera system, a mobile terminal, and a method for acquiring a three-dimensional (3D) image in various embodiments of the present disclosure, which can improve the photographing performance of the camera system.

An embodiment of the present disclosure provides a camera system, which includes, a first photographing device, a second photographing device, a photographing assistance device, and a processor; where the photographing assistance device is configured to emit a first feature light to an object to be photographed; the first photographing device is configured to collect a second feature light reflected by the object to be photographed after the first feature light is emitted by the photographing assistance device; the second photographing device includes a main camera and at least one secondary camera, and the main camera is configured to collect a first image of the object to be photographed, and the secondary camera is configured to collect a second image of the object to be photographed; and the processor is configured to acquire depth information of the object to be photographed according to the second feature light; and the processor is further configured to perform feature fusion on the first image and the second image, and perform stereo registration on a result of feature fusion and the depth information, to acquire a three-dimensional (3D) image of the object to be photographed.

An embodiment of the present disclosure further provides a mobile terminal, which includes a body and a camera system arranged on the body.

An embodiment of the present disclosure further provides a method for acquiring a three-dimensional (3D) image, which includes, emitting a first feature light to an object to be photographed; acquiring, a second feature light reflected by the object to be photographed collected by a first photographing device, a first image of the object to be photographed captured by a main camera, and a second image of the object to be photographed captured by a secondary camera; acquiring depth information of the object to be photographed according to the second feature light; and performing feature fusion on the first image and the second image, and performing stereo registration on a result of feature fusion and the depth information to acquire a 3D image of the object to be photographed.

### BRIEF DESCRIPTION OF DRAWINGS

One or more embodiments are illustrated in conjunction with the corresponding figure in the drawings, which do not constitute the limitation of the embodiments. Same reference numerals in the drawings are assigned to the same elements, and unless otherwise stated, the figures in the drawings do not limit the scale.
FIG. 1 depicts a schematic diagram showing a camera system according to an embodiment of the present disclosure;
FIG. 2 depicts a schematic diagram showing a camera system according to another embodiment of the present disclosure;
FIG. 3 depicts a schematic diagram showing a camera system according to yet another embodiment of the present disclosure;
FIG. 4 depicts a schematic diagram showing a camera system according to yet another embodiment of the present disclosure;
FIG. 5 depicts a schematic diagram showing information fusion of a camera system according to an embodiment of the present disclosure;
FIG. 6 depicts a schematic diagram showing a camera system according to yet another embodiment of the present disclosure;
FIG. 7 depicts a schematic diagram showing a mobile terminal according to an embodiment of the present disclosure;
FIG. 8 depicts a schematic diagram showing a mobile terminal according to another embodiment of the present disclosure;
FIG. 9 depicts a schematic diagram showing a mobile terminal according to yet another embodiment of the present disclosure;
FIG. 10 depicts a schematic diagram showing a mobile terminal according to yet another embodiment of the present disclosure;
FIG. 11 depicts a schematic diagram showing a mobile terminal provided according to yet another embodiment of the present application.
FIG. 12 depicts a schematic diagram showing a mobile terminal according to yet another embodiment of the present disclosure;
FIG. 13 depicts a schematic diagram showing a mobile terminal according to yet another embodiment of the present disclosure;
FIG. 14 depicts a schematic diagram showing a mobile terminal according to yet another embodiment of the present disclosure;
FIG. 15 depicts a schematic diagram showing a mobile terminal according to yet another embodiment of the present disclosure;
FIG. 16 depicts a schematic diagram showing a mobile terminal according to yet another embodiment of the present disclosure;
FIG. 17 depicts a schematic diagram showing a mobile terminal according to yet another embodiment of the present disclosure;
FIG. 18 depicts a schematic diagram showing a mobile terminal according to yet another embodiment of the present disclosure;
FIG. 19 depicts a schematic diagram showing a mobile terminal according to yet another embodiment of the present disclosure;
FIG. 20 depicts a schematic diagram showing a mobile terminal according to yet another embodiment of the present disclosure;
FIG. 21 depicts a flowchart showing a method for acquiring a three-dimensional image according to an embodiment of the present disclosure;
FIG. 22 depicts a schematic diagram showing the interaction of a mobile terminal under a wireless network according to an embodiment of the present disclosure; and
FIG. 23 depicts a schematic diagram showing the interaction between the mobile terminal and the MEC platform according to an embodiment of the present disclosure.

### DETAILED DESCRIPTION

Various embodiments of the present disclosure will be described in detail below in conjunction with the drawings to illustrate the purpose, technical scheme and advantages of the present disclosure. However, it shall be appreciated by those having ordinary skills in the art that many technical details are put forward in order to clarify the present disclosure. However, the technical solutions claimed in the present disclosure can be practiced even without these technical details and various alternations and modifications based on the following embodiments.

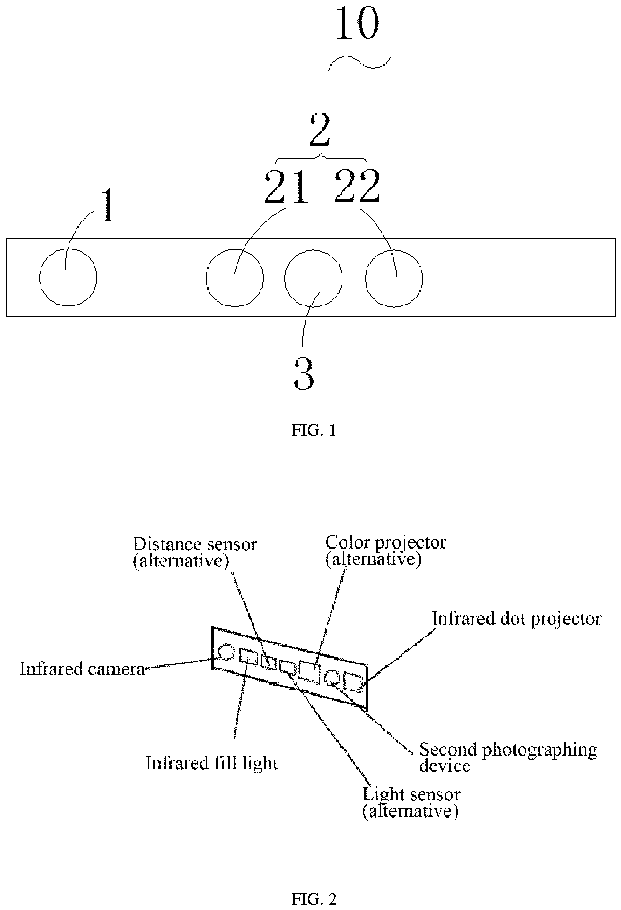

An embodiment of the present disclosure relates to a camera system 10. As shown in FIG. 1, the camera system 10 includes, a first photographing device 1, a second photographing device 2, a photographing assistance device 3, and a processing device (not shown).

The photographing assistance device 3 is configured to emit a first feature light to the object to be photographed. The first photographing device 1 is configured to collect a second feature light reflected by the object to be photographed after the first feature light is emitted by the photographing assistance device 3. The second photographing device 2 includes a main camera 21 and at least one secondary camera 22. The main camera 21 is configured to collect a first image of the object to be photographed, and the secondary camera 22 is configured to collect a second image of the object to be photographed. The processor is configured to acquire depth information of the object to be photographed according to the second feature light, and is further configured to perform feature fusion on the first image and the second image, and perform stereo registration on a result of feature fusion and the depth information to acquire a three-dimensional image of the object to be photographed.

It should be noted that the processor in this embodiment can be arranged in the camera system 10. Alternatively, the processor can be arranged in a mobile terminal having the camera system 10. It is not intended to limit the position of the processor in this embodiment, and the processor can be arranged according to practical requirements.

Compared with the prior art, this embodiment of the present disclosure has the advantage that the processor acquires the depth information of the object to be photographed according to the second feature light collected by the first photographing device, and then fuses the depth information with the images photographed by a plurality of color cameras (i.e., the main camera and at least one secondary camera), so that the static multi-direction (especially forward and backward) three-dimensional recognition or reconstruction can be realized, and the continuous and dynamic three-dimensional recognition and reconstruction can be realized. Thus, diversified application scenes of the system and richer contents of the images are achieved, and the imaging is significantly enhanced and improved, and the photographing performance of the camera system is improved.

Please refer to FIG. 2, the photographing assistance in this embodiment is an infrared dot projector, the first photographing device is an infrared camera, and the second photographing devices are two color cameras, one of the color cameras is a high-definition main camera, and the other color camera is a periscope multiple optical zoom camera or a wide-angle camera. It can be understood that more second cameras can be provided, and high-definition cameras, wide-angle cameras, telephoto cameras, or multiple optical zoom cameras can be selected to form a set of multi-functional cameras, such that the camera system 10 can have a variety of combined imaging functions.

In particular, the infrared dot projector is configured to project a structured light coded pattern to the object to be photographed. The first photographing device is configured to collect the infrared structured speckles reflected by the object to be photographed after the structured light coded pattern projected by the infrared dot matrix projector. The processor is configured to acquire the depth information according to the infrared structured speckles. In order to facilitate understanding, the acquisition of the depth information in this embodiment will be illustrated below.

The infrared dot projector modulates the fringes programmed or preset by a computer onto the infrared speckle and projects the infrared speckles to the object to be photographed. The infrared camera is configured to photograph the bending degree of the fringes modulated by the object, demodulate the bending fringes to acquire the phases, then convert the phases into the height of the whole field, and acquire the complete depth information of the object to be photographed.

The camera system 10 shown in FIG. 2 further includes an infrared fill light, which is configured to compensate for the insufficiency of light during infrared information acquisition.

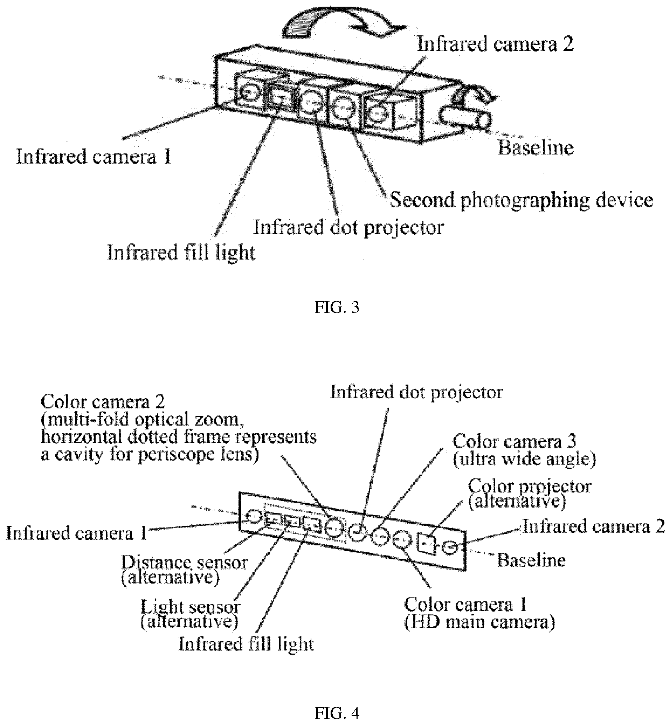

Referring to FIG. 3, the first photographing device includes an infrared camera 1 and an infrared camera 2, and both infrared cameras (collectively called binocular cameras) are configured to collect infrared structured speckles reflected by the object to be photographed. The processor is configured to perform parallax fusion on the infrared structure speckles collected by the two infrared cameras to acquire the depth information. In order to facilitate understanding, the following will illustrate how the camera system 10 as shown in FIG. 3 acquires a three-dimensional image of an object to be photographed.
1. The infrared dot projector projects the structured light coded pattern to calibrate the characteristics of the object to be photographed.
2. Two infrared cameras symmetrically disposed on the same baseline are utilized to respectively acquire the left and right special images of distortion information generated when the structured light source is projected on the object to be photographed.
3. Distortion rectification and epipolar rectification are performed on the left and right images according to the information of stereo calibration, so that they are aligned.
4. Same features (gray scale or others) are searched for in the left and right images, and a parallax image is output.
5. According to the trigonometric method and the geometric position of the binocular cameras with a common baseline, the depth value is acquired according to the parallax depth calculation formula, and the depth information with high resolution and precision is generated.

It is worth mentioning that, in the above process, the participation of the structured light in binocular depth calculation mainly solves the problem regarding the difficulty in feature calibration of traditional binocular algorithms.

In this embodiment, after the binocular structured light assembly rotates, the typical effective viewing area is an area of 0-180 degrees or 0-360 degrees. The rotation can be done at any angle in such an area. The binocular structured light assembly can enhance the texture of the target object and the binocular positioning is independent of the infrared projector. And thus, the binocular structured light assembly can perform high-precision three-dimensional recognition in the viewing area of 0-180 degrees or 0-360 degrees, and which is well applicable in static and dynamic scenes and dark environments (video information is collected by infrared camera). In this case, the binocular structured light assembly can meet the optical application requirements of mobile terminals by rotating after the default unidirectional arrangement of the assembly is done.

Referring to FIG. 4, in this embodiment, the second photographing device includes a main camera and two secondary cameras. The color camera 1 is the main camera of high-definition, the color camera 2 is a periscope multi-fold optical zoom camera, and the color camera 3 is a wide-angle camera. Only the color camera 1 can operate alone, and the color camera 1 can also operate with any one of the color cameras 2 and 3. In order to facilitate understanding, the following will illustrate how the camera system 10 as shown in FIG. 4 acquires a three-dimensional image of an object to be photographed.
1. The binocular structured light assembly acquires the depth information of the object to be photographed (binocular parallax analysis and block matching calculation based on dual infrared cameras). At the same time, the plurality of color cameras preprocess the target image and fuses the information from two cameras (actually two cameras of the plurality of color cameras are operating at the same time, and usually, the main camera of high-definition shall be one of the two operating color cameras, and information fusion from two cameras is realized through the calibration of the main camera and the secondary camera), so as to acquire the color information of the object to be photographed.
2. Stereo registration is performed on the color information and the depth information, that is, the matching of two or more images captured by different image acquisition devices to the same coordinate system, the main purpose of which is to determine the spatial coordinate relationship between corresponding points in different images.
3. A three-dimensional (3D) point cloud is formed. The reason why a 3D point cloud is formed instead of a depth map or grid form lies mainly in that the data of the point cloud is easy to obtain and store, with discrete and sparse characteristics, and it is also easy for the data to expand into high-dimensional feature information.
4. An artificial intelligence (AI) engine is loaded to classify and segment the 3D point cloud. The data of the 3D point cloud is disordered, and multi-camera acquisition will lead to multiplication in noise, which results in the difficulty in the direct application of convolution into the data of the 3D point cloud to obtain local correlation information between three-dimensional points. At the same time, the collected data of the point cloud is likely to be unevenly distributed, and the density of the point cloud in different areas is different, which leads to the difficulty in the sampling of the data points during feature extraction. Therefore, an AI engine is loaded based on the 3D point cloud, and a deep learning approach is utilized, such as learning a cross-transformation based on the input points, which is then utilized to simultaneously weight the input features associated with the points and rearrange them into a potentially implicit canonical order, then product and summation operations are performed on the elements, and the 3D point cloud is thus classified and segmented.
5. 3D image recognition or reconstruction is realized. 3D recognition is mainly utilized for security unlocking and payment by users, and 3D reconstruction is mainly utilized in game modeling, virtual reality, and augmented reality.

It can be understood that in the camera system 10 as shown in FIG. 4, the color information superimposed on the depth information is not only from the color camera 1 (the main camera of high-definition), but also from the color camera 2 (multi-fold optical zoom camera, the horizontal dotted frame represents a cavity for periscope lens, which can be disposed behind a small sized distance sensor and an ambient light sensor) and the color camera 3 (wide-angle or ultra-wide-angle camera). Therefore, the camera system 10 has the three-dimensional recognition of multi-direction and multi-camera imaging functions of multi-direction.

The camera system 10 as shown in FIG. 4 can further include a color projector, a distance sensor, and a light sensor, in which the color projector can be utilized for augmented reality (AR) projection, and the distance sensor and the light sensor are conventional devices deployed on mobile terminals for proximity sensing and ambient light sensing. The color projector can cooperate with the mobile terminal for AR projection. And the distance sensor and the light sensor can be arranged on the body of the mobile terminal body instead of in the camera system 10. In some embodiments, the distance sensor is disposed on the camera system 10 for having a target pre-recognition function.

It is worth mentioning that the 3D recognition and reconstruction enables the images captured by the camera to reflect the actual state of objects in 3D space as real as possible, that is, to reconstruct the realistic 3D scene with the 2D images captured by the cameras. Such reconstructions are realized by means of, the binocular parallax of the binocular structured light assembly (two infrared cameras), the dual-camera calibration between color cameras, and the stereo registration between binocular structured light assembly and color cameras described in the above method, all of which involve the processing of mapping matrix and distortion calibration. In terms of the mapping matrix, as long as two types of cameras or two types of image systems are present, it is necessary to carry out coordinate transformation for the real world and the imaging plane (involving the transformation between world coordinates and camera coordinates, transformation between camera coordinates and image coordinates, and transformation between world coordinates and image coordinates). A transformation matrix can substantially include internal parameters (referring to the internal geometric and optical characteristics of cameras, each camera corresponds to a unique internal parameter) and external parameters (the position and direction of cameras in the external world coordinate system (spatial three-dimensional coordinates) or the translated and rotated positions of the cameras relative to the origin of the world coordinate system). In terms of distortion, in order to improve the luminous flux, lenses are deployed in the cameras instead of small holes for imaging. A large number of lenses, which are spherical lenses, are being deployed now, rather than aspherical lenses completely conforming to the ideal optical system, thus resulting in radial distortion and tangential distortion, which shall be calibrated and eliminated.

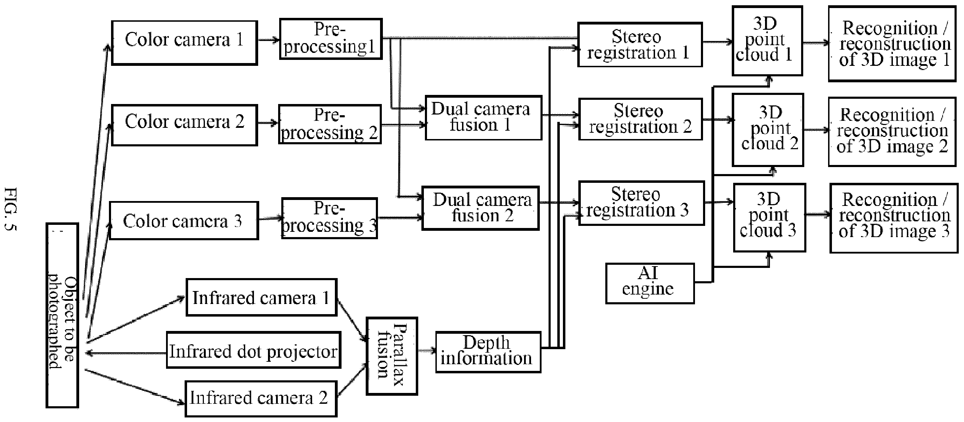

Referring to FIG. 5, RGB images taken by color camera 1 can be stereo-registered with depth information after system preprocessing to form RGB Depth Map (RGBD) 3D point cloud 1, and then the recognition or reconstruction of the three-dimensional image 1 is realized by the loaded AI engine. The images preprocessed by the color camera 2 and the color camera 1 respectively are subjected to dual camera fusion 1 followed by three-dimensional registration with depth information to generate a three-dimensional point cloud 2, and then the recognition or reconstruction of the three-dimensional image 2 is realized by the loaded AI engine. The images preprocessed by the color camera 3 and the color camera 1 respectively are subjected to dual camera fusion 2 followed by three-dimensional registration with depth information to generate a three-dimensional point cloud 3, and then the recognition or reconstruction of the three-dimensional image 3 is realized by the loaded AI engine. Therefore, three different forms of three-dimensional image recognition or reconstruction are acquired. If there are more cameras, more three-dimensional image recognition or reconstruction can be formed in a similar manner. For example, N color cameras form N different forms of three-dimensional image recognition or reconstruction, which enables the presentation of different details in different dimensions of the target and differentiated reconstruction of different emphasis factors.

It can be understood that, binocular structured light and common baseline multi-color cameras realize information fusion, which not only enables static multi-direction (especially forward and backward) three-dimensional recognition or reconstruction, but also enables continuous and dynamic three-dimensional recognition and reconstruction, so that the application scenarios are diversified, the content is richer, and the user experience performance is better. Although single-form 3D image recognition or reconstruction can also achieve more special image features by means of pure digital processing, such processing is substantially a "post-processing" by a processor, and is limited by the original image acquisition ability of the hardware. It is still not possible to realize a large number of special image effects or the effects are poor. For example, digital zoom is limited by the optical zoom performance of the original camera no matter how the zoom is performed. By such a comparison, the three different forms of three-dimensional image recognition or reconstruction as shown in FIG. 4 will significantly enhance the image effect due to the advantages of the original hardware capture capability, and increase the flexibility of the image post-processing.

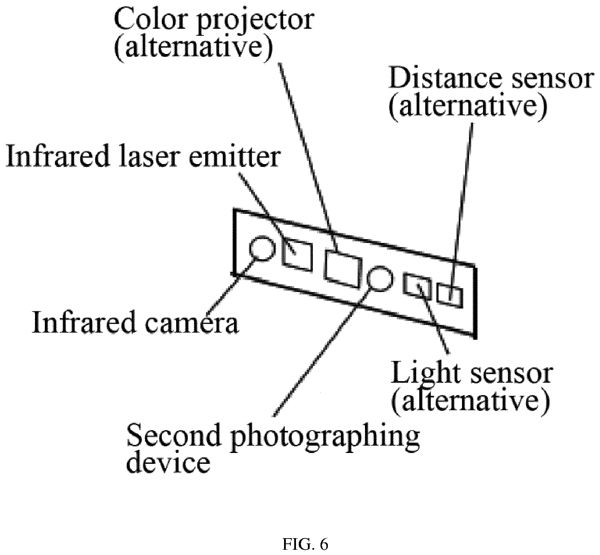

Referring to FIG. 6, which shows that photographing assistance device is an infrared laser emitter. In particular, the infrared laser emitter is configured to emit pulsed laser spots to the object to be photographed. The first photographing device is configured to collect the infrared lights reflected by the object to be photographed after the infrared laser emitter emits the pulsed laser spots. The processor is further configured to acquire a first time at which the infrared laser emitter emits the pulsed laser spots and a second time at which the first photographing device receives the infrared lights, and acquire the depth information according to the difference between the first time and the second time. In order to facilitate understanding, the acquisition of the depth information in this embodiment will be illustrated below.

The infrared laser emitter emits hundreds of thousands of pulsed laser spots, which are diffused evenly to the object to be photographed. Then the processor acquires the depth information of the object according to the difference between the time at which the infrared lights emit to the object to be photographed and the time at which the infrared camera receives the infrared light reflected by the object, and acquires the depth information of the object to be photographed in conjunction with the color information acquired by the color cameras.

It should be noted that the infrared dot projector consumes less power and is more suitable for static scenes, and the infrared laser emitter has lower noise at long distances and higher frame rate, and is more suitable for dynamic scenes. When the orientation of the camera system 10 is set to front facing or rear facing by default, the infrared dot projector is usually oriented to face forward, and the infrared laser emitter is usually oriented to face backward. When the default single orientation is the top, both components can be deployed. When the camera system 10 faces both forward and backward, the infrared dot matrix projector is usually oriented to face forward and the infrared laser emitter is usually oriented to face backward. Under the rotating application, it is advisable to deploy an infrared laser emitter to ensure a more balanced multi-direction depth information acquisition performance of the camera system 10 (the intensity of dot matrix light projected by infrared dot matrix projector attenuates quickly, and it is easily interfered and weaken by typical strong light such as sunlight, so it is only suitable for short-range depth information acquisition in specific directions).

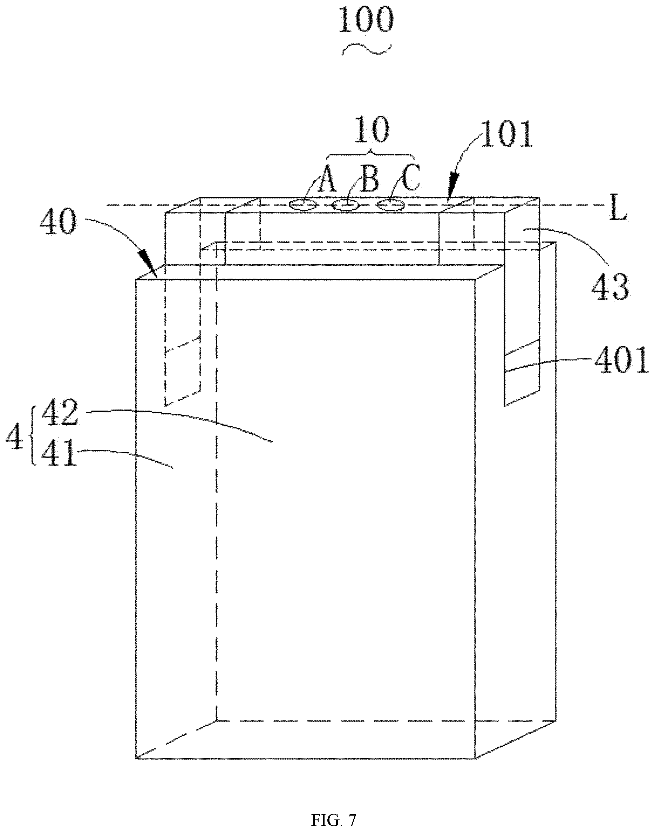

An embodiment of the present application relates to a mobile terminal 100, which is schematically shown in FIG. 7. The mobile terminal 100 includes a body 4 and the camera system 10 described in the above embodiments arranged on the body 4.

In particular, the camera system 10 includes a rectangular first side surface 101, on which a first photographing device A, a second photographing device B and a photographing assistance device C are arranged. The centers of the first photographing device A, the second photographing device B and the photographing assistance device C are all located on the midline L of the long side of the first side surface 101.

The camera system 10 is rotatably connected with the body 4. The body 4 includes a first surface 41 on which a display is arranged and a second surface 42 opposite to the first surface 41. A controller (not shown) is arranged within the body 4. The controller is configured to control the rotation of the camera system 10. The first side surface 101 can rotate at least from the same side of the first surface 41 to the same side of the second surface 42. With this configuration, the multi-angle photographing demand for the mobile terminal 100 can be met, thus improving the reliability of the mobile terminal 100.

The body 4 includes a top 40 on which the camera system 10 is arranged, and each side of the top 40 is provided with a sliding rail 401. The body 4 further includes a periscope mechanism 43 that is movably connected with the sliding rails 401 and rotatably connected with the camera system 10. The controller is further configured to control the periscope mechanism 43 to move along the slide rails 401, so that the camera system 10 moves with the periscope mechanism 43 along the moving direction of the periscope mechanism 43.

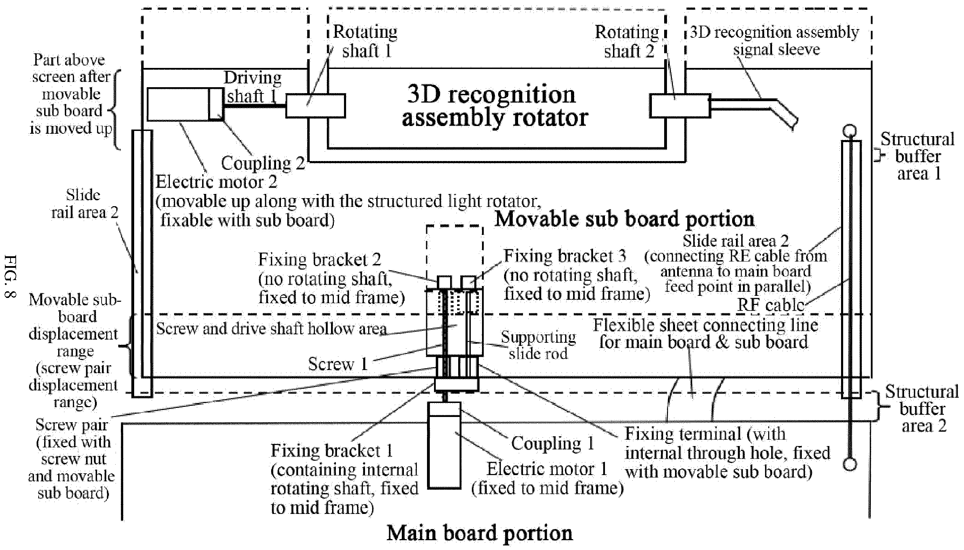

Referring to FIG. 8, the camera system 10 includes a 3D recognition assembly rotator on which a 3D recognition assembly (including a first photographing device, a second photographing device and photographing assistance device) is fixed. The 3D recognition assembly rotator is lifted and lowered by a periscope mechanism (not shown in FIG. 7) driven by an electric motor 1 (typically a stepping motor) Actually, the rotary motion of the electric motor 1 is transformed into linear motion. During this process, the motion of the electric motor 1 is transmitted to a screw through coupling 1, and the screw moves axially but does not move up and down. The screw nut on the screw pair and the periscope mechanism fixed with the screw nut are driven to move up and down by the inclined trapezoidal thread of the axially rotating screw (better with rolling balls). The camera system 10 when is not in use, is hidden behind the display, and will be lifted to the top of the mobile terminal 100 by the periscope mechanism when in use. In this embodiment, the electric motor 2 can drive the 3D recognition assembly rotator through coupling 2 to realize multi-direction structured light. Generally speaking, the electric motor 1 lifts and lowers the periscope mechanism, and the electric motor 2 rotates the 3D recognition assembly rotator.

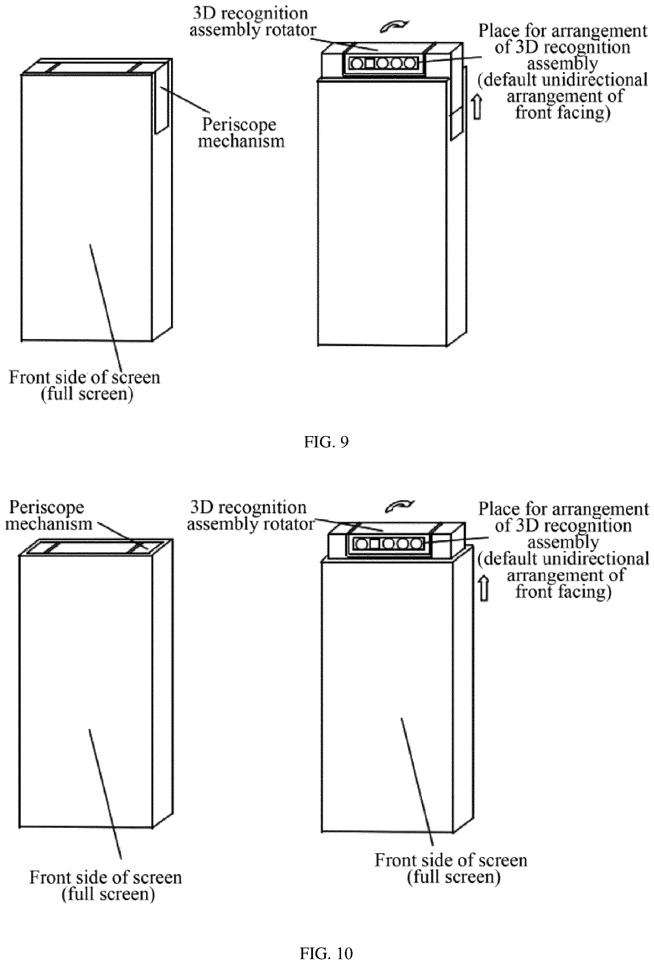

Referring to FIG. 9, the mobile terminal 100 has a concave space directly exposed between the screen and the rear case, and the periscope mechanism is embedded in this space and moves up and down. When the periscope mechanism is lowered to the bottom, the top of the periscope mechanism is aligned with the top of the screen and the rear case, so that the top of the terminal device forms a flat top surface. When the periscope mechanism is lifted to the top, the camera system 10 is completely exposed to the outside of the screen or the rear case, and at the same time, below the camera system, a passage space is formed when viewed from the side of the camera system.

Referring to FIG. 10, as the passage space affects the appearance and causes dust accumulation, side casing blocks are added to both sides of the periscope mechanism, so that the periscope mechanism is completely encompassed inside the mobile terminal 100.

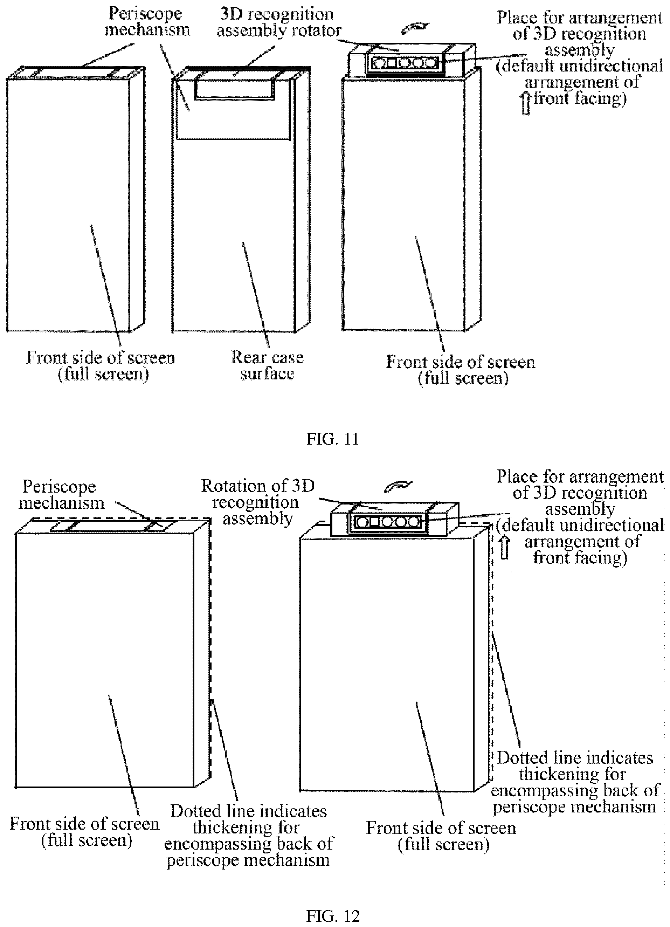

Referring to FIG. 11, the back of the periscope mechanism is not covered by the battery case, so that the back of the periscope mechanism is exposed.

Referring to FIG. 12, the periscope mechanism is spaced apart from the side casing blocks of the mobile terminal 100, so that the mobile terminal 100 has more internal space for components arrangements.

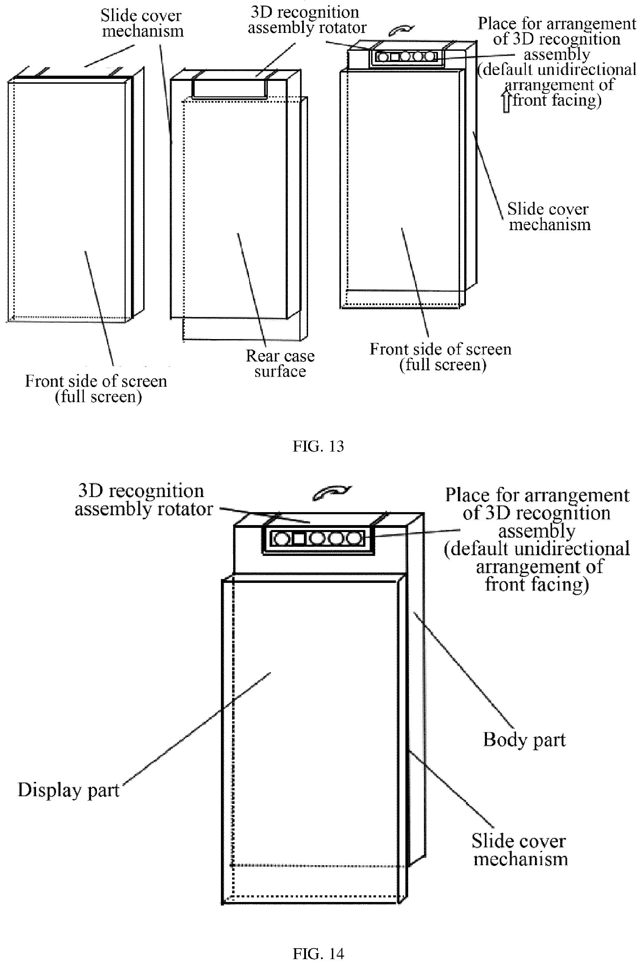

Referring to FIG. 13, the camera system 10 can also be arranged on the sliding cover means of the mobile terminal 100 with the sliding cover function. After the sliding cover means slides away from the top of the screen, the 3D recognition assembly rotator can rotate the 3D recognition assembly, and the orientation of the 3D recognition assembly is thus changed.

Referring to fig. 14, the sliding mechanism separates the mobile terminal 100 into two parts, i.e., the display and the body. The periscope mechanism is not arranged in the body, so it is not necessary to consider lifting and lowering of the periscope mechanism, and only a single electric motor is needed to rotate the 3D recognition assembly rotator. During operation, the sliding cover slides up, such that, the rotating body supporting the 3D recognition assembly is exposed and positioned above the screen, to allow operation of the 3D recognition assembly.

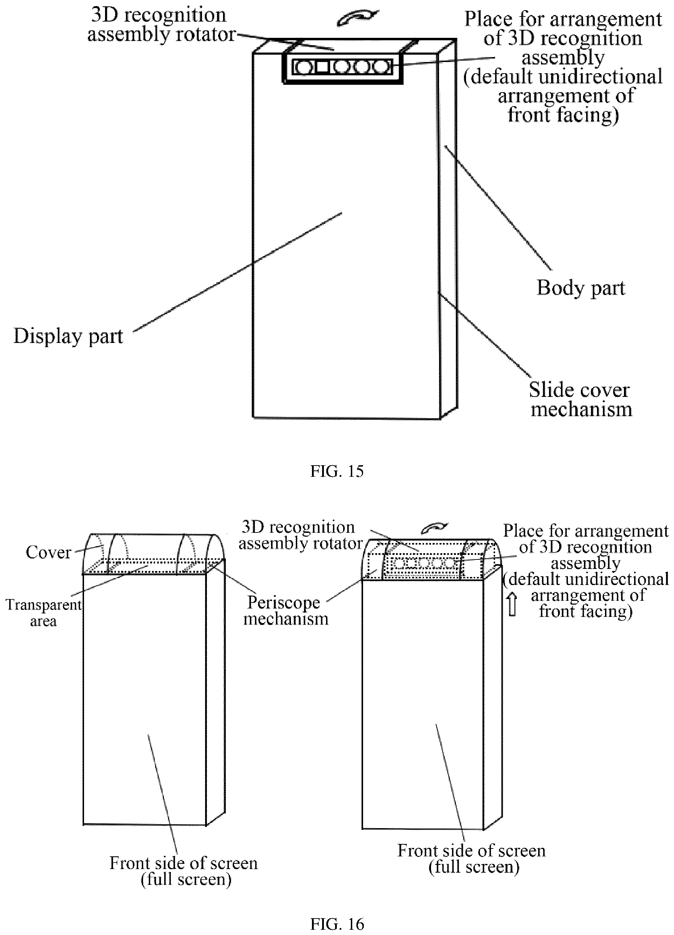

Referring to FIG. 15, the mobile terminal 100 of the typical straight style as shown is not provided with the periscope mechanism. And the 3D recognition assembly rotator at the top of the mobile terminal provides a notch appearance on the front of the screen.

To sum up, the 3D recognition assembly on the 3D recognition assembly rotator, whether on the periscope mechanism or the mobile terminal with the sliding cover, set by default to a single orientation (facing the front or the back) or a dual orientation facing the front and the back. When rotated, the 3D recognition assembly can be oriented at any angle within 180 degrees of the top dome.

Referring to FIG. 16, a cover is additionally arranged outside the 3D recognition assembly rotator to prevent external dust from depositing on the surface of the 3D recognition assembly rotating body, the dust will otherwise affect the photographing performance of the 3D recognition assembly. Also, the cover provides a simple and beautiful appearance for the mobile terminal.

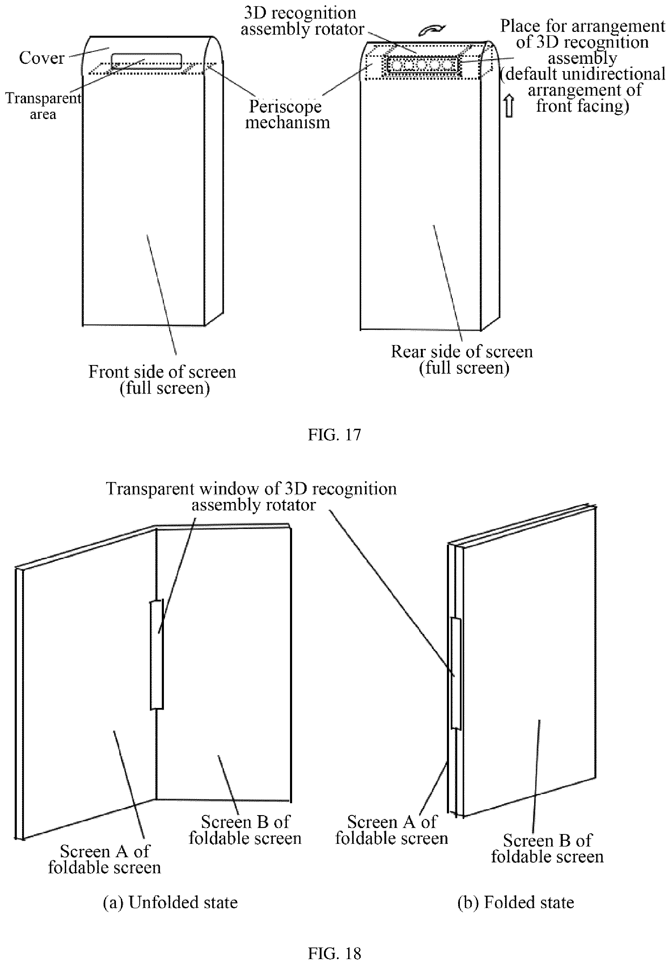

Referring to FIG. 17, the cover of the 3D recognition assembly rotator can be integrated with the display, that is, the display can be extended to the top of the mobile terminal to form a curved screen at the top (the curved screen at the top encompasses the 3D recognition assembly rotator, and may display nothing or may display outside the area of the optical transceiver in 3D recognition assembly, curved screen at the top can have a consistent appearance with the front screen of the display when the display is not bright). Even, the display can be extended all the way from the top to the rear of the mobile terminal, forming a longitudinal surrounding screen, so that both the front and rear screens can be more flexibly applied due to the rotation of the 3D recognition assembly on the top.

The cover may be formed of a material that is the same as or similar to that of the touch screen cover of the display. A transparent area is formed in the cover at the place corresponding to the effective rotation range of the optical transceiver to receive and transmit optical signals, and the rest of the positions are mainly dark or opaque to obscure the user's view. Alternatively, it is also possible to form transparent windows at only a few fixed positions, such as the front, back, or top, etc. In this case, optical signals are sent and received at those fixed positions merely. In an embodiment, the shape of the cover is a semicircle close to the running track of the optical transceiver to avoid signal distortion of the optical transceiver caused by the irregular shape.

Referring to FIG. 18, the integration of the cover of the 3D recognition assembly rotator and the display can also be deployed in a mobile terminal with a foldable screen. In such a case, a motor and a 3D recognition assembly rotator can be axially mounted on the rotating shaft of the foldable screen, and the rotator is driven by the motor. The corresponding area of the foldable screen encompasses the 3D recognition assembly rotator, and transparent windows are formed in the area corresponding to the optical transceivers of the 3D recognition assembly, the area has a consistent appearance with the rest parts of the foldable screen when the display is not bright (the transparent area in FIG. 17 is located in the middle of the rotating shaft of the foldable screen, that is, the rotating shaft is positioned at both ends of the 3D recognition assembly rotator that includes the controlling motor. At the same time, on the rear surface of the foldable screen, transparent windows should be formed corresponding to the area on the screen facing the optical transceivers of the 3D recognition assembly, so that the 3D recognition assembly rotator has two operating faces, and each operating face has a maximum operating area of 180 degrees, so the 3D recognition assembly can operate at any angle within the range of 360 degrees (the 3D recognition assembly will be blocked only when facing the body of the mobile terminal, but the final imaging effect can be compensated by software algorithm).

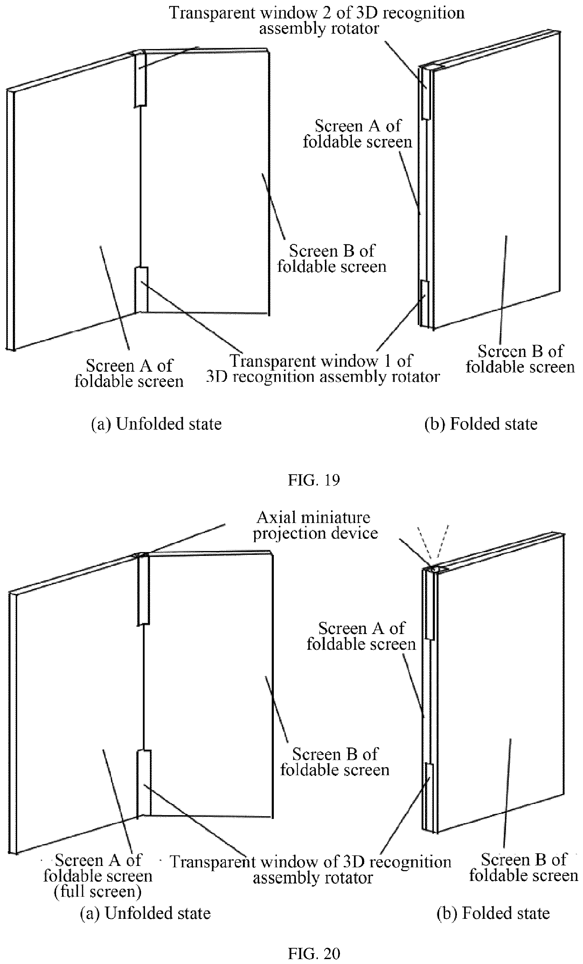

Referring to FIG. 19, each end of the rotating shaft of the mobile terminal with the foldable screen is provided with a 3D recognition assembly rotator, that is, the rotating shaft is in the middle, and 3D recognition assembly rotators are on both sides of the rotating shaft. In such a configuration, fewer optical devices are provided on a single side, the effective area of the display will be larger, and the user's experience will be better. However, due to the baseline requirement for the joint operations of 3D recognition assemblies, the algorithm of joint operations of the 3D recognition assemblies on both ends of the rotating shaft is rather challenging. Thus, the configuration where the 3D recognition assembly rotator is merely provided at a single end of the rotating shaft, is usually more feasible and the cost of hardware is lower.

Referring to FIG. 20, in the configuration where 3D recognition assembly rotator is merely provided at a single end of the rotating shaft, an axial miniature projection device can be arranged at the other end of the rotating shaft, that is, the projection lens of the projection device is provided outside along the extension axis of the rotating shaft, so that the size of the projection device in such an arrangement can be larger and the visible light brightness can be higher. Compared with the color projector as shown in FIG. 4, the axial miniature projection device can effectively improve the representation of 3D images recognized and reconstructed by the 3D recognition assembly, providing enhanced user experience for AR projection, holographic projection (the medium is a holographic film, water screen, air, etc.) and other application scenes. In addition, in terms of the display effect of the screen, the lateral surface of the projection device can have the same appearance as the 3D recognition assembly rotator, or can still be an effective display area.

In FIGS. 7 to 20 as described above, there are many lateral arrangements for optical devices of the 3D recognition assembly rotator, and the recognition accuracy can be ensured from the rotation of the binocular structured light in all directions. With the help of the colorful cameras with diversified uses, desired imaging effects can be achieved by a single orientation arrangement. This arrangement greatly enhances the forward optical sensing and recognition of the mobile terminal with the camera system 10, in view of the current situation that imaging of the front-facing camera is generally poorer than that of the rear-facing camera. In addition, all optical sensing and recognition devices are arranged on the rotator, so that the integrity of the shell right behind the body of the mobile terminal can be maintained since there is no need to provide a hole for a camera. At the same time, the shape of the circuit board inside the body of the mobile terminal is more regular since there is no need to provide a hole for the camera module, which leads to the optimization and enhancement of the circuit layout to a certain extent.

Through the rotatable binocular structured light assembly, 3D recognition at any angle in the top semicircle of 180 degrees (tablet or sliding cover type) or 360 degrees (foldable screen type) of the mobile terminal can be achieved. In terms of some typical applications of the front-facing and rear-facing cameras, the functions of secure unlocking (high-precision face recognition) and secure payment (secure payment based on high-precision face recognition) and selfie and face beautify can be realized by the front-facing camera(s). AR, Virtual Reality (VR), Mixed Reality (MR) applications, and three-dimensional object reconstruction in games, shopping, or the like can be realized by the rear-facing camera(s). With the addition of multiple color cameras, the application of the camera system can be further expanded. A typical one is that users can experience continuous rotation of the color stereo dynamic real-time AR, VR, and MR application environment on the mobile terminal within the range of 180 degrees or 360 degrees, instead of the poor user experience that relies on the pre-stored virtual reality environment within the mobile terminal. In other words, the rotating 3D recognition assembly rotator is for a better user experience of AR, VR, and MR in continuous wide stereoscopic scenes, and the binocular structured light technology scheme is selected for 3D recognition due to the balanced multi-direction application performance of the binocular structured light technology scheme.

An embodiment of the present disclosure provides a device and a method for continuously rotating the three-dimensional recognition device of a mobile terminal, the method includes, arranging a continuous rotatable three-dimensional recognition device on the top of the mobile terminal or on a rotating shaft of the mobile terminal; and realizing an application of stereoscopic real-time dynamic virtual reality by loading a local artificial intelligence engine or an artificial intelligence engine arranged at an edge computing end onto three-dimensional image information collected by the continuous rotatable three-dimensional recognition device.

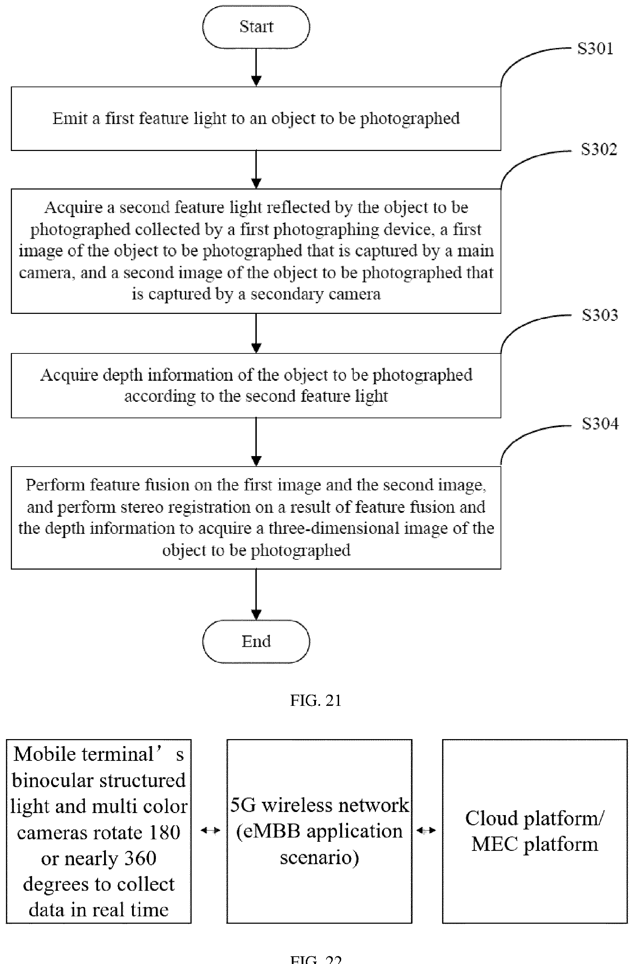

An embodiment of the present disclosure relates to a method for acquiring three-dimensional images. The schematic flow of this embodiment is shown in FIG. 21, and includes the following operations.

At S301, a first feature light is emitted to an object to be photographed.

In an implementation, the first feature light in this embodiment can be a structured light coded pattern projected by an infrared dot projector or a pulsed laser spot emitted by an infrared laser emitter. It is not intended to limit the type of the first feature light in this embodiment, and the type of the first feature light can be set according to practical requirements.

At S302: a second feature light reflected by the object to be photographed collected by a first photographing device, a first image of the object to be photographed that is captured by a main camera, and a second image of the object to be photographed that is captured by a secondary camera are acquired.

When the first feature light is the structured light coded pattern projected by the infrared dot projector, the second feature light is the infrared structured speckle reflected by the object to be photographed. And when the first feature light is the pulse laser spot emitted by the infrared laser emitter, the second feature light is the infrared light reflected by the object to be photographed.

In this embodiment, the main camera is a high-definition camera, the secondary camera is a periscope multi-fold optical zoom camera or a wide-angle camera, and both the first image and the second image captured are color images of the object to be photographed.

In this embodiment, acquiring the second feature light reflected by the object to be photographed collected by the first photographing device, is performed through the following operations, acquiring a first infrared structured speckle reflected by the object to be photographed collected by the first infrared camera; and acquiring a second infrared structured speckle reflected by the object to be photographed collected by a second infrared camera. Since monocular structured light relates to the received texture information projected onto the object by an infrared matrix projector through a single infrared camera, and the depth information is acquired by calculation of the distortion of the texture. The monocular structured light requires an infrared dot projector of very high accuracy, and the cost increases accordingly, but the diffracted light decays in intensity quickly and is susceptible to serious interference by ambient light. In this embodiment, the binocular structured light is utilized. In other words, texture information is added to the object to be photographed when collecting the information of the object in a binocular manner, so that the recognition distance and accuracy of the whole object to be photographed (whether at a long distance or a short distance) will be significantly improved. And a general random texture infrared projector is deployed in the binocular structured light assembly which is assembled with a general double-lens assembly process, thus greatly simplifying the calibration process, improving the yield and mass production, and having a relative cost advantage.

At S303, depth information of the object to be photographed is acquired according to the second feature light.

When the first characteristic light is the structured light coded pattern projected by the infrared dot projector, the infrared camera is configured to photograph the bending degree of the fringes modulated by the object, demodulate the bending fringes to acquire the phases, then convert the phases into the height of the whole field, and acquire the complete depth information of the object to be photographed. When the first feature light is a pulsed laser spot emitted by an infrared laser emitter, the depth information of the object is acquired according to the difference between the time at which the infrared lights emit to the object to be photographed and the time at which the infrared camera receives the infrared light reflected by the object, and acquire the depth information of the object to be photographed in conjunction with the color information acquired by the color cameras.

At S304, feature fusion is performed on the first image and the second image, and stereo registration is performed on a result of feature fusion and the depth information to acquire a three-dimensional image of the object to be photographed.

In an implementation, two or more images captured by different image acquisition devices are matched to the same coordinate system to form a three-dimensional point cloud, and an AI engine is loaded to classify and segment the three-dimensional point cloud, so as to realize three-dimensional image recognition or reconstruction.

It can be understood that the above processes require the powerful computing performance of the processor of the mobile terminal, and are finally stored in the memory of the mobile terminal in the form of software. In terms of the storage and computing capacity of the mobile terminal is concerned, the flow processing in the static operating mode with limited directions or the dynamic operating mode with limited frames is within reach. However, in case that the binocular structured light and multi-color camera rotate continuously for 180 degrees or 360 degrees for data processing in 3D dynamic real-time AI with Extended Reality (XR, covering AR, VR, MR) application environments, it is challenging to process all the above processes still by the mobile terminal. In this case, it is necessary to utilize the cloud or Mobile Edge Computing (MEC) platform based on the 5th Generation (5G) wireless network. In this case, the mobile terminal operates in the low-latency and wide-bandwidth 5G mobile communication network Enhanced Mobile Broadband (eMBB) scenario, so as to ensure that the cloud platform or MEC platform can be cooperatively integrated with local computing in real-time, and then achieve a good user experience (as shown in FIG. 22).

The cloud computing service department of the cloud platform is generally located in the cloud data center on the core network side, and the transmission network from users to the data center is under great pressure at the peak of services. At this time, the user experience will be extremely poor or even inaccessible to networks would occur. MEC technique upgrades the traditional wireless base station to a smart base station, and offloads the computing, network and storage of cloud data center from the core network to the distributed base station. As a bridge between network and service, MEC technique is a key factor to deal with the wide bandwidth, low latency and localized vertical industry applications related to 5G communication.

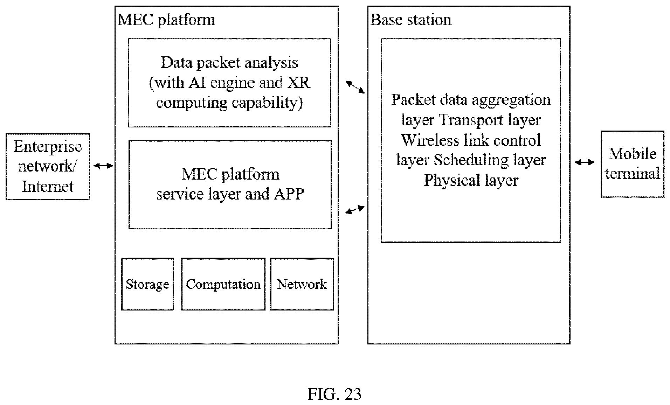

As shown in FIG. 23, the MEC platform has AI engine and XR (AR, VR, MR) computing capability, as well as storage and network service functions. The MEC platform performs data packet analysis on the fusion information of multi-color cameras and structured light from mobile terminals and typical contents like the videos provided by enterprise networks or Internet, and provides low-latency localized services. MEC platform is deployed in a wireless access network or cloud-based wireless access network, which effectively reduces the network load of the core network, and brings users a good user experience with low latency, smart loading, real-time interaction, and customization.

For the convenience of understanding, the application of interaction between the mobile terminal and the MEC platform in this embodiment will be illustrated below.
1. The mobile terminal establishes a link with the base station and establishes a session with the MEC platform.
2. The binocular structured light assembly and the color cameras of the mobile terminal rotate continuously (for 180 degrees or 360 degrees) to acquire pre-processing information or preliminary fusion information about an object.
3. The dynamic 3D image data generated by continuous rotation is compressed (generally, the image block is decomposed first and then compressed by discrete cosine transform and wavelet transform).
4. The mobile terminal transmits data to the base station (from the physical layer to the packet data aggregation layer).
5. The MEC platform analyzes and calculates the compressed data of binocular structured light and multi-color camera pre-processing or fusion information uploaded by the mobile terminal through AI+XR by means of the data analyzing ability thereof to form 3D recognition and reconstruction information (necessary image recovery, as well as image enhancement, are needed during the 3D recognition and reconstruction).
6. A determination is performed as to whether the 3D identification and reconstruction information is associated with the enterprise network/Internet application related to the capability open channel, and if so, further fusion processing will be carried out.
7. The 3D identification and reconstruction information or information associated with the enterprise network/Internet application is returned to the mobile terminal to realize the completion of low-latency localization services.

Compared with the prior art, this embodiment of the present disclosure has the advantage that the depth information of the object to be photographed is acquired according to the second feature light collected by the first photographing device, and then the depth information is fused with the images photographed by a plurality of color cameras (i.e., the main camera and at least one secondary camera), so that the static multi-direction (especially forward and backward) three-dimensional recognition or reconstruction can be realized, and the continuous and dynamic three-dimensional recognition and reconstruction can be realized. Thus diversified application scenes of the system and richer contents of the images are achieved, and the imaging is significantly enhanced and improved, and the photographing performance of the camera system is improved.

It shall be understood by those having ordinary skill in the art that the above are some embodiments for implementing the present disclosure, and in practical application, various alternations in form and details can be made without departing from the scope of the present disclosure.

## Claims

1. A camera system, comprising, a first photographing device, a second photographing device, a photographing assistance device, and a processor; wherein,
the photographing assistance device is configured to emit a first feature light to an object to be photographed;
the first photographing device is configured to collect a second feature light reflected by the object to be photographed after the first feature light is emitted by the photographing assistance device;
the second photographing device comprises a main camera and at least one secondary camera, and the main camera is configured to collect a first image of the object to be photographed, and the secondary camera is configured to collect a second image of the object to be photographed; and
the processor is configured to acquire depth information of the object to be photographed according to the second feature light; and the processor is further configured to perform feature fusion on the first image and the second image, and perform stereo registration on a result of feature fusion and the depth information, to acquire a three-dimensional (3D) image of the object to be photographed.

2. The camera system according to claim 1, wherein, the photographing assistance is an infrared dot projector;
the infrared dot projector is configured to project a structured light coded pattern to the object to be photographed;
the first photographing device is configured to collect infrared structured speckles reflected by the object to be photographed after the structured light coded pattern is projected by the infrared dot projector; and
the processor is configured to acquire the depth information according to the infrared structured speckles.

3. The camera system according to claim 2, wherein the first photographing device includes at least two infrared cameras;
each of the infrared cameras is configured to collect the infrared structured speckles reflected by the object to be photographed; and
the processor is configured to perform parallax fusion on the infrared structure speckles collected by the at least two infrared cameras to acquire the depth information.

4. The camera system according to claim 1, wherein the photographing assistance device is an infrared laser emitter;
the infrared laser emitter is configured to emit a pulsed laser spot to the object to be photographed;
the first photographing device is configured to collect an infrared light reflected by the object to be photographed after the infrared laser emitter emits the pulsed laser spot; and
the processor is further configured to acquire a first time at which the infrared laser emitter emits the pulsed laser spot and a second time at which the first photographing device receives the infrared light, and acquire the depth information according to a difference between the first time and the second time.

5. A mobile terminal, comprising,
a body, and the camera system according to any one of claims 1 to 4, wherein, the camera system is arranged on the mobile terminal.

6. The mobile terminal according to claim 5, wherein, the camera system includes a rectangular first side surface, each of the first photographing device, the second photographing device and the photographing assistance device are arranged on the first side surface, and each center of the first photographing device, the second photographing device and the photographing assistance device is located on a midline of a long side of the first side surface.

7. The mobile terminal according to claim 6, wherein the camera system is rotatably connected with the body of the mobile terminal, and the body includes a first surface provided with a display, and a second surface opposite to the first surface, and a controller is arranged within the body; and
the controller is configured to control a rotation of the camera system, wherein the first side surface is rotatable at least from a same side of the first surface and to a same side of the second surface.

8. The mobile terminal according to claim 6, wherein the body comprises a top provided with the camera system, both sides of the top are provided with a slide rail, and the body further comprises a periscope mechanism movably connected with the slide rails, and the periscope mechanism is rotationally connected with the camera system; and
the controller is further configured to control to periscope mechanism to move along the slide rails, such that the camera system moves along with the periscope mechanism in a moving direction of the periscope mechanism.

9. The mobile terminal according to claim 5, wherein the terminal body comprises a rotating shaft and a foldable screen, wherein the rotating shaft is arranged in a middle of the foldable screen, and the foldable screen is foldable about the rotating shaft; and
the camera system is mounted on the rotating shaft and is rotatable up to 360 degrees about the rotating shaft; the camera system comprises an optical transceiver mounted on at least one end of the rotating shaft or in a middle of the rotating shaft, and an area of the foldable screen facing the optical transceiver is a transparent area.

10. The mobile terminal according to claim 9, wherein the rotating shaft comprises a first end and a second end opposite to the first end, and both the first end and the second end are provided with the optical transceiver.

11. The mobile terminal according to claim 9, wherein the rotating shaft comprises a first end and a second end opposite to the first end, and the optical transceiver is arranged at the first end; and
the mobile terminal further comprises an axial mini-projector device that is arranged on the second end.

12. A method for acquiring a three-dimensional (3D) image, comprising,
emitting a first feature light to an object to be photographed;
acquiring, a second feature light reflected by the object to be photographed collected by a first photographing device, a first image of the object to be photographed captured by a main camera, and a second image of the object to be photographed captured by a secondary camera;
acquiring depth information of the object to be photographed according to the second feature light; and performing feature fusion on the first image and the second image, and performing stereo registration on a result of feature fusion and the depth information to acquire a 3D image of the object to be photographed.

13. The method according to claim 12, wherein,
acquiring the second feature light reflected by the object to be photographed collected by the first photographing device comprises,
acquiring first infrared structured speckles reflected by the object to be photographed collected by a first infrared camera; and
acquiring second infrared structured speckles reflected by the object to be photographed collected by a second infrared camera; and
acquiring the depth information of the object to be photographed according to the second feature light comprises,
performing parallax fusion on the first infrared structured speckles and the second infrared structured speckles, to acquire the depth information.

14. The method according to claim 12, wherein performing stereo registration on the result of the feature fusion and the depth information to acquire the 3D image of the object to be photographed comprises,
performing stereo registration on the result of the feature fusion and the depth information to acquire a 3D point cloud; and
classifying and segmenting the 3D point cloud by means of an Artificial Intelligence (AI) engine to acquire the 3D image of the object to be photographed.

15. The method according to claim 12, wherein performing stereo registration on the result of the feature fusion and the depth information to acquire the 3D image of the object to be photographed comprises,
performing stereo registration on the result of the feature fusion and the depth information to acquire a 3D point cloud; and
classifying and segmenting the 3D point cloud by means of a Mobile Edge Computing (MEC) platform to acquire the 3D image of the object to be photographed, wherein the MEC platform has an AI engine, Extended Reality (XR) computing capability covering Augmented Reality (AR), Virtual Reality (VR), Mixed Reality (MR), and storage and network service functions.
